# EUROPEAN PATENT APPLICATION

(11) **EP 4 447 010 A1**
(43) Date of publication of application: **16.10.2024**
(21) Application number: 23184791.4
(22) Date of filing: 11.07.2023
(51) Int. Cl.: G07C 1/30, G06Q 30/0283, G07B 15/02

(54) **ELECTRONIC PARKING DISC AND AUTOMATIC PARKING TIMEKEEPING METHOD**

(30) Priority: 13.04.2023 CN 202310392941
(71) Applicant: Hangzhou Royal Craft Industrial Co., Ltd., Hangzhou, Zhejiang 310052 (CN)
(72) Inventor: YAO, Xiaoyong, Hangzhou, 310052 (CN); MIN, Xing, Hangzhou, 310052 (CN)
(74) Representative: Patent 42

(57) **Abstract**

The invention belongs to the field of parking metering technology, specifically relates to an electronic parking disc, automatic parking timekeeping method. The electronic parking disc includes a vibration frequency detection module (100), a vehicle status update module (200), a display module (300) connected in series; the vibration frequency detection module (100) is configured to detect the vehicle vibration frequency data within a preset time period; the vehicle status update module (200) updates the real-time status of the vehicle according to the vehicle vibration frequency data within a preset time period; the display module (300) is used to display parking time data when the vehicle transitions from a driving state to a stopped state, and to stop displaying parking time data when the vehicle transitions from a stopped state to a driving state. This invention can ensuring accurate vehicle status determination and automatic parking time data displaying while reducing application costs.

## Description

### TECHNICAL FIELD

The present invention belongs to the field of parking billing technology and specifically relates to a method of electronic parking disc and automatic parking timekeeping method.

### BACKGROUND TECHNOLOGY

In some parking lots, especially in some parking lots in countries such as Germany, the Netherlands and Austria where car owners pay their own fees, in order to reduce operating costs, or because the intelligence construction is not mature enough, a timing and billing system that can electronically lift the lever by recognizing the license plate is not set up, and car owners are required to take the initiative to pay parking fees according to the actual parking hours and the parking lot billing notices, so artificially record of the parking time of the car in the parking lot is required. In order to improve the convenience of parking billing in this scenario, there is a need for a device that can automatically time and display the parking duration of a vehicle, which should be able to time the vehicle when it is in the parking state and terminate the time when it enters the driving state. Based on the above background, the production cost of the device and the accuracy of determining whether the vehicle is in a driving state or a parking state are particularly important.

A number of studies of this type of device exist. For example, the Chinese invention patent with application number CN200980159212.1 discloses an automatic parking disc which samples a signal provided by an accelerometer, said signal having signal parameters that indicate the traveling motion of said land vehicle, said accelerometer being a multi-axis accelerometer which simultaneously measures velocity changes in multiple directions, and whose processor is configured to: filter the sampled signal to suppress components of said signal outside of a frequency window; integrate the filtered signal over a time period to provide an integrated signal parameter; and determine a state change from parking to driving if the current state is parking and said integrated signal parameter is greater than an upper threshold, or determine a state change from driving to parking if the current state is moving and said integrated signal parameter is less than a lower threshold.

Another example is the use of acceleration sensors as sensors for determining whether the vehicle is in a driving or parking state, as suggested in the European invention patents with application numbers EP01830633.2 and EP02002964.1.

It can be seen that the current method of judging whether the vehicle is in the driving state or parking state is mostly based on the acceleration data collected by the accelerometer. However, using accelerometer, first of all, its application cost is high; secondly, the current process of judging the vehicle status according to the signal collected by accelerometer is more complicated, and a series of processing of the collected signal is needed in the middle, as the example provided in the above-mentioned Chinese invention patent with application number CN200980159212.1; thirdly, the user will sometimes move the position of parking disc once or more in the car, based on the measurement principle of accelerometer, even if the vehicle is in the parking state, the moving process of the parking disc is easy to be identified as the vehicle is in the driving state, so using the accelerometer sensor to determine whether the vehicle is in driving state or parking state is not accurate enough.

### SUMMARY

To solve the above-mentioned problems in the prior art, the present invention provides an electronic parking disc and an automatic parking timekeeping method, which can update the real-time status of the vehicle and realize real-time timing of the parking duration based on the vibration frequency data detected.

The present invention uses the following technical solutions:

An electronic parking disc, including a vibration frequency detection module, a vehicle status update module and a display module connected in series;
the vibration frequency detection module is configured for detecting a vehicle vibration frequency data within a preset time period;
the vehicle status update module is configured for updating a real-time status of the vehicle according to the vehicle vibration frequency data within the preset time period;
the display module displays parking time data when the vehicle changes from a driving state to a stopped state, and stops displaying the parking time data when the vehicle changes from a stopped state to a driving state.

Preferably, the preset time period ranges from 1s to 10s.

Preferably, the preset time period ranges from 3s to 5s.

As a preferred solution, a ball-type vibration sensor is adopted in the vibration frequency detection module; the ball-type vibration sensor comprising a vibration sensing switch, the vibration sensing switch comprising:
an insulating body with a hollow structure;
two metal electrode covers, which are inserted into the ends of the insulated body to seal it, with their opposing surfaces concave inward to create a housing space;
two balls, which are placed within the housing space, with their combined diameter slightly smaller than the maximum width of the housing space;
when the insulating body is in a static state, the balls are in contact with the metal electrode covers, causing the vibration sensing switch to be in an ON state; when the insulated body experiences vibration, the balls momentarily separate due to bouncing, resulting in the vibration sensing switch being turned OFF.

As a preferred solution, the display module comprises a timekeeping unit that provides a reference time, the displayed parking time data includes the reference time when the vehicle changes from a driving state to a stopped state.

As a preferred solution, the displayed parking time data include a duration of the vehicle's stopped state after it changes from driving state to the stopped state.

As a preferred embodiment, the vibration frequency detection module is configured to detect the vehicle's vibration frequencies corresponding to a plurality of sub-time periods within the preset time period, and the vibration frequency data comprise vehicle's vibration frequencies for each sub-time period.

As a preferred embodiment, the vehicle status update module comprises a connected vibration judgment unit and a status update unit; the vibration judgment unit is connected to the vibration frequency detection module, and the status update unit is connected to the display module;
the vibration judgment unit is configured for determining whether the vehicle is vibrating and/or a cause of vehicle vibration based on the vehicle's vibration frequencies for each sub-time period within the preset time period and a plurality of predetermined threshold ranges;
the status update unit, based on a judgment result of the vibration judgment unit, updates a real-time status of the vehicle.

As a preferred solution, the vehicle status update module comprises a curve forming unit, a vibration judgment unit, and a status update unit connected in series; the curve forming unit being connected to the vibration frequency detection module, and the status update unit being connected to the display module;
the curve forming unit is configured to fit the vehicle's vibration frequencies for each sub-time period within the preset time period to form a vehicle's vibration frequency variation curve;
the vibration judgment unit is configured for determining whether the vehicle is vibrating based on the vehicle vibration frequency variation curve and/or for determining a cause of the vehicle vibration based on a similarity between the vehicle vibration frequency variation curve and predetermined template curves corresponding to different vibration causes;
the status update unit is used for updating a real-time status of the vehicle based on the judgment result of the vibration judgment unit.

As a preferred solution, the electronic parking disc further comprises an alarm module and a power supply module; the power supply module being connected to the display module and the alarm module, respectively; the power supply module comprising a power supply unit and a battery level detection unit;
the power supply unit is configured for supplying power to the electronic parking disc;
the battery level detection unit is configured for detecting a real-time battery level of the power supply module;
the display module, is further configured for displaying a real-time battery level of the power supply module;
the alarm module triggers an alarm when the battery level of the power supply unit falls below the preset threshold.

As a preferred solution, the electronic parking disc further comprises a key control module connected to the timekeeping unit;
the key control module is configured for adjusting the reference time in the timekeeping unit.

As a preferred solution, the key control module is also configured for adjusting a display mode of the display module, and the display mode comprises a night mode and a day mode.

As a preferred solution, it also includes an ambient temperature monitoring module connected to the display module, and the ambient temperature monitoring module is configured to detect the temperature inside the vehicle, and the display module is also configured to display the temperature inside the vehicle in real time.

The present invention further provides an automatic parking timekeeping method with an electronic parking disc according to the invention, comprising steps of:
detecting (S 1) vehicle vibration frequency data within a preset time period;
updating (S2) a real-time status of the vehicle according to vehicle vibration frequency data within the preset time period;
displaying (S3) parking time data if the vehicle transitions from a driving state to a stopped state, and stops the display of the parking time data if the vehicle transitions from a stopped state to a driving state;
repeating (S4) the steps detecting (S1) to displaying (S3), in a loop.

As a preferred solution, in step detecting: detecting the vehicle vibration frequency corresponding to a plurality of sub-time periods within the preset time period, and combining the vehicle vibration frequencies of each sub-time period to form the vehicle vibration frequency data within the preset time period.

As a preferred solution, step updating (S2) includes the steps of:
determining, according to a vehicle vibration frequency of each sub-time period within the preset time period and a plurality of preset threshold ranges, whether the vehicle vibrates and/or a vehicle vibration cause;
updating the real-time status of the vehicle based on the determination result of the vibration determination unit.

As a preferred solution, step updating (S2) comprises, specifically:
fitting the vehicle vibration frequencies corresponding to each sub-time period within the preset time period to form a vehicle vibration frequency variation curve;
determining whether the vehicle vibrates according to the vehicle vibration frequency variation curve, and/or determining a vehicle vibration cause based on the similarity between the vehicle vibration frequency variation curve and the vehicle vibration frequency template curves corresponding to predetermined vibration causes;
updating the real-time status of the vehicle based on the determination result of the vibration determination unit.

The beneficial effects of the present invention are:

The present invention can update the real-time status of the vehicle based on the vehicle vibration frequency data, ensuring accurate vehicle state determination while reducing application costs. It also displays parking time data based on the changes in the vehicle's real-time status.

By utilizing vehicle vibration frequency data, this invention can intuitively determine whether the vehicle is in a driving state or a stopped state. This is because each state corresponds to specific vehicle vibration frequency data. Therefore, there won't be situations where the vehicle is mistakenly classified as being in a stopped state when its speed value decreases but it is still moving at a low speed, which can occur when using acceleration-based methods for determination.

The use of a ball-type vibration sensor allows the two balls to freely roll in any direction within the confined space. This means that regardless of the direction in which the vehicle vibrates, the balls can either separate or come into contact, thereby opening or closing the internal contacts of the sensor to detect the vibration frequency. Thus, the detected vibration frequency reflects the overall vibration of the vehicle. In contrast, an accelerometer would require the measurement and processing of acceleration signals in multiple directions, especially in the vertical and horizontal directions, necessitating the use of a multi-axis accelerometer. Furthermore, an accelerometer cannot detect vertical acceleration when measuring in the horizontal direction. Therefore, the use of a vibration sensor significantly reduces costs compared to using an accelerometer.

When the electronic license plate is accidentally moved, the vibration frequency generated by the license plate is much lower than the vibration frequency during normal vehicle operation. Thus, using vehicle vibration frequency data for determination avoids mistakenly classifying the vehicle as being in a driving state due to the accidental movement of the license plate.

In this invention, the vehicle's vibration and the cause of the vibration are determined based on the vehicle vibration frequencies corresponding to multiple sub-time periods. This helps to avoid misjudgments caused by transient vibrations.

The invention fits the vehicle vibration frequencies corresponding to each sub-time period within the preset time period to form a vehicle vibration frequency variation curve. The vehicle's vibration and the cause of the vibration are determined based on this variation curve and the similarity between the variation curve and the predetermined vibration cause template curve. Transforming the data from discrete points to a continuous curve greatly enhances the accuracy of the determination.

### BRIEF DESCRIPTION OF THE DRAWINGS

In order to more clearly illustrate the embodiments of the present disclosure or the technical solutions in the prior art, the drawings that need to be used in the embodiments or the prior art are briefly described below, and it is obvious that the accompanying drawings in the following description are merely some embodiments of the present disclosure, and those skilled in the art may obtain other drawings according to these drawings without involving any inventive effort.
FIG. 1 is a schematic structural diagram of an electronic parking disc according to Embodiment 1.
FIG. 2 is a schematic diagram of the structure of a vibration sensing switch according to Embodiment 1.
FIG. 3 is a schematic structural diagram of an electronic parking disc according to Embodiment 2.
FIG. 4 is a flowchart of an automatic parking timekeeping method according to Embodiment 3.

In the figures:
100: Vibration frequency detection module; 200: Vehicle status update module;
201: Curve formation unit; 202: Vibration judgment unit; 203: Status update unit; 300: Display module; 301: Timekeeping unit;
400: Ambient temperature monitoring module; 500: Power supply module;
600: Alarm module; 700: key control module;
10: Insulating body; 20: Metal electrode cover; 30: Ball; 50: Housing space

### DETAILED DESCRIPTION OF THE EMBODIMENTS

Other advantages and effects of the present disclosure will be readily apparent to those skilled in the art from the disclosure of this specification through specific embodiments. The present disclosure may also be implemented or applied by other different specific embodiments, and various details in the present specification may also be modified or changed without departing from the spirit of the present disclosure based on different viewpoints and applications. It should be noted that, in the case of no conflict, the following embodiments and features in the embodiments may be combined with each other.

### Embodiment 1

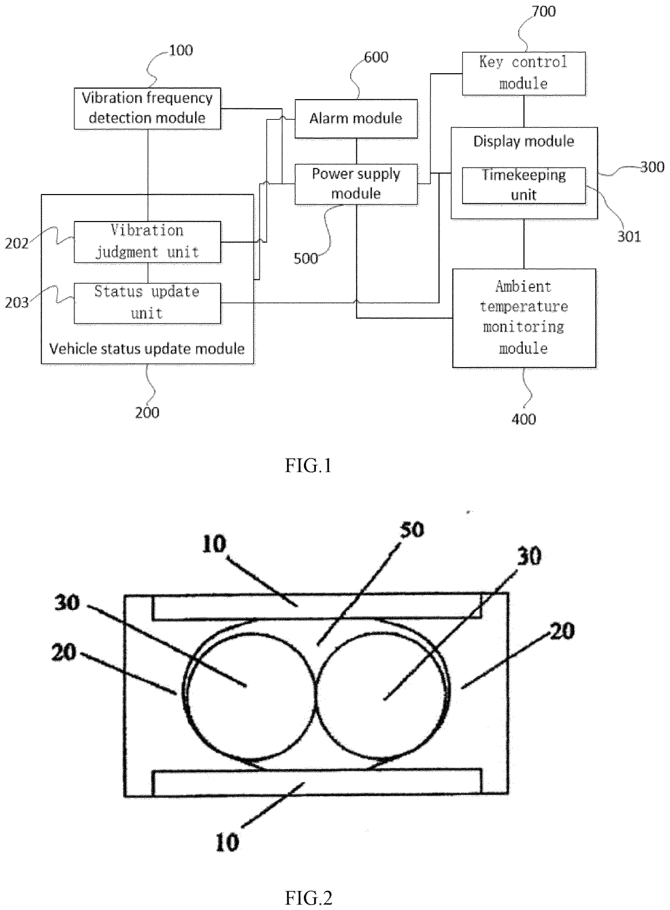

Referring to Figure 1, the present embodiment provides an electronic parking disc, including a vibration frequency detection module 100, a vehicle status update module 200 and a display module 300 connected in series;
the vibration frequency detection module 100 is used for detecting the vehicle vibration frequency data within a preset time period;
the vehicle status update module 200 is configured for updating the real-time status of the vehicle according to the vehicle vibration frequency data within the preset time period;
the display module 300 displays a parking time data when the vehicle changes from a driving state to a stopped state, and stops displaying the parking time data when the vehicle changes from a stopped state to a driving state.

The display module 300 in this embodiment includes a front display unit and a rear display unit with the same function, which are set at the front and rear end of the parking disc, respectively, to facilitate the user to view from the inside and outside of the vehicle, and the display module is also provided with a night mode and a day mode, and the night mode will light up the display screen.

As can be seen, the electronic parking disc described in this embodiment uses the vehicle vibration frequency data collected by the vibration sensor to determine the vehicle status, which reduces the production cost of the parking disc while ensuring accurate vehicle state determination, and displays the parking time data when the vehicle is in a parked state,

In this embodiment, the vehicle's vibration frequency data is used to visually determine whether the vehicle is in a driving or stopped state. Since both driving and stopped states have their respective corresponding vibration frequency data, there will be no misjudgment of the vehicle's state as stopped state even if the vehicle's speed abruptly decreases while it is still in a low-speed driving state, which could occur when using acceleration-based judgment.

Furthermore, in this embodiment, the vibration frequency generated when the parking disk is accidentally moved is much lower than the vibration frequency during normal vehicle operation. Therefore, using the vehicle's vibration frequency data for determination will not result in misjudging the vehicle as being in a driving state due to accidental movement of the parking disk.

Further, referring to figure 2, a ball-type vibration sensor is adopted in the vibration frequency detection module; the ball-type vibration sensor comprising a vibration sensing switch, the vibration sensing switch comprising:
an insulating body 10 with a hollow structure;
two metal electrode covers 20, which are inserted into the ends of the insulated body 10 to seal it, with their opposing surfaces concave inward to create a housing space 50;
two balls, which are placed within the housing space 50, with their combined diameter slightly smaller than the maximum width of the housing space 50;
when the insulating body 10 is in a static state, the balls are in contact with the metal electrode covers 20, causing the vibration sensing switch to be in an ON state; when the insulated body experiences vibration, the balls momentarily separate due to bouncing, resulting in the vibration sensing switch being turned OFF. Based on the on-off state of the vibration sensing switch, the high and low level changes can be used to detect the vibration frequency.

The structure of the vibration sensing switch has been publicly disclosed by utility model patent CN202126963U. This embodiment represents an improvement in its application scenario. In this embodiment, the specific effect achieved is as follows:
the ball-type vibration sensor allows the two balls to freely roll in any direction within the space provided. Therefore, regardless of the direction in which the vehicle vibrates, the separation or contact between the two balls can be achieved, thereby opening or closing the internal contacts of the sensor. This facilitates the detection of vibration frequency, which reflects the overall vibration of the vehicle. Thus, a single overall vibration frequency data is sufficient to understand the vehicle's overall vibration condition.

Further, the display module 300 includes a timekeeping unit 301 that provides a reference time. The displayed parking time data includes the reference time when the vehicle transitions from a driving state to a stopped state.

Here, the reference time displayed represents the time the vehicle arrived at the parking area when transitioning from a driving state to a stopped state.

The display module 300 can round the reference time to the nearest half-hour for display. For example, if the reference time when the vehicle transitions from a driving state to a stopped state is 11:14, it can be rounded to 11:30 for display. Similarly, if the reference time is 11:45, it can be rounded to 12:00 for display. However, if the reference time coincides with a half-hour mark, no rounding is performed. For example, if the reference time is 11:30 or 12:00, no rounding is done to provide users with better free parking service.

The displayed parking time data also includes the duration of the stopped state after the vehicle transitions from a driving state to a stopped state.

Here, the displayed duration represents the specific length of time the vehicle has been parked in the parking area, providing a more intuitive representation.

It should be noted that besides being applicable to the aforementioned free parking scenario, this electronic license plate can also be used in paid parking scenarios. When calculating the final parking fee, it can be based on the reference time displayed by the display module when the vehicle transitions from a driving state to a stopped state or the duration of the stopped state after the transition.

The vibration frequency detection module is used to detect the vehicle's vibration frequency corresponding to multiple sub-time periods within a preset time, and the vibration frequency data comprises vehicle's vibration frequencies for each sub-time period.

The vehicle status update module 200 includes a connected vibration judgment unit 202, and a status update unit 203; the vibration judgment unit 202 is connected to the vibration frequency detection module 100, and the status update unit 203 is connected to the display module 300.

The vibration judgment unit 202 is used for determining whether the vehicle is vibrating and/or a cause of vehicle vibration based on the vehicle's vibration frequency for each sub-time period within the preset time period and multiple predetermined threshold ranges.

The status update unit 203, based on the judgment result of the vibration judgment unit, update the real-time status of the vehicle.

That is, in this embodiment, the judgment of whether the vehicle is vibrating and a cause of vehicle vibration based on the vehicle's vibration frequency for each sub-time period within the preset time period and a plurality of predetermined threshold ranges. In order to minimize false detections caused by transient vibrations, it is necessary to have multiple sub-time intervals, each corresponding to a specific threshold range of vehicle vibration frequency. Only when the vibration frequency of the vehicle falls within the corresponding threshold range for each sub-time interval, the vehicle can be determined to be in the corresponding state. Otherwise, a reevaluation is performed.

In this embodiment, the preset time period can be set between 3 seconds and 5 seconds. Also can be set between 1 seconds and 10 seconds. The duration of each sub-time interval can be set to 1 second, or even shorter in milliseconds, depending on the specific requirements and needs.

In this embodiment, as long as the vibration frequency is greater than 0Hz, it is considered that the vehicle is vibrating.

Furthermore, in this embodiment, a first threshold range of 0.5Hz to 5Hz is set. Only when the vibration frequency exceeds this range, specifically when it is greater than 5Hz, will the reason for the vehicle's vibration be determined. Otherwise, no judgment will be made if the vibration frequency is within the range of 0.5Hz to 5Hz.

Considering that there are various causes of vehicle vibration, especially including the vibration caused by the normal driving of the vehicle, the engine vibration when the vehicle starts, so it is necessary to effectively distinguish between the two causes.

Therefore, in this embodiment, especially for these two causes, set the corresponding threshold range.

### For example:

Set the second threshold range, if the vibration frequency falls within this range, it is considered to be caused by the opening or closing of the vehicle doors. Therefore, even if vibrations are detected, the vehicle is still determined to be in a stationary state. In this embodiment, the second threshold range is set as 5Hz to 15Hz.

Set the third threshold range, in this range, it is considered to be the engine's own vibration, so even if the vibration is detected, the vehicle is still judged to be in the stopped state and continue timing, the second threshold range in this embodiment is set to be 15Hz~30Hz.

Set the fourth threshold range, in this range, it is considered to be the vibration caused by the normal driving of the vehicle, so the vehicle is judged to be in the driving state, and the timing is terminated, the third threshold range in this embodiment is set to be 30Hz~50Hz.

The above threshold range can be set according to the actual situation, such as the vehicle vibration avoidance performance, engine performance, the user's parking lot road level and so on.

The vibration frequency generated simply by the accidental movement is much lower than the vibration frequency caused by normal vehicle operation. Therefore, there will be no erroneous judgments in this case.

Referring to Figure 1, the parking disc of the embodiment further comprising an alarm module, a power supply module, the power supply module being connected to the display module and the alarm module, respectively; the power supply module comprising a power supply module and a battery level detection unit;
the power supply unit is used for supplying power to the electronic parking disc;
the battery level detection unit is used for detecting the real-time battery level of the power supply unit;
the display module 300, is also used for displaying the real-time battery level of the power supply unit;
the alarm module 600, is also used to alarm when the power supply unit's battery level is lower than a preset threshold.

The alarm unit 600 can also be connected to the vibration judgment unit 202, when the vibration frequency exceeds the fault threshold, the vehicle failure or accident is judged, the flashing of the alarm light is implemented , in order to make it easier for the owner to get help.

The power supply unit in this embodiment applies a removable button battery.

It also includes a key control module 700 connected to the timing unit.

The key control module 700 is used to adjust the reference time in the timing unit 301. Specifically, it can be adjusted according to the real time of the corresponding country or region.

The key control module 700 is also used to adjust the display mode of the display module 300. The display modes include night mode and day mode.

The parking disk in this embodiment also includes an ambient temperature monitoring module connected to the display module, which is used for detecting the temperature inside the car, and the display module is also used for real-time display of the temperature inside the car.

### Embodiment 2:

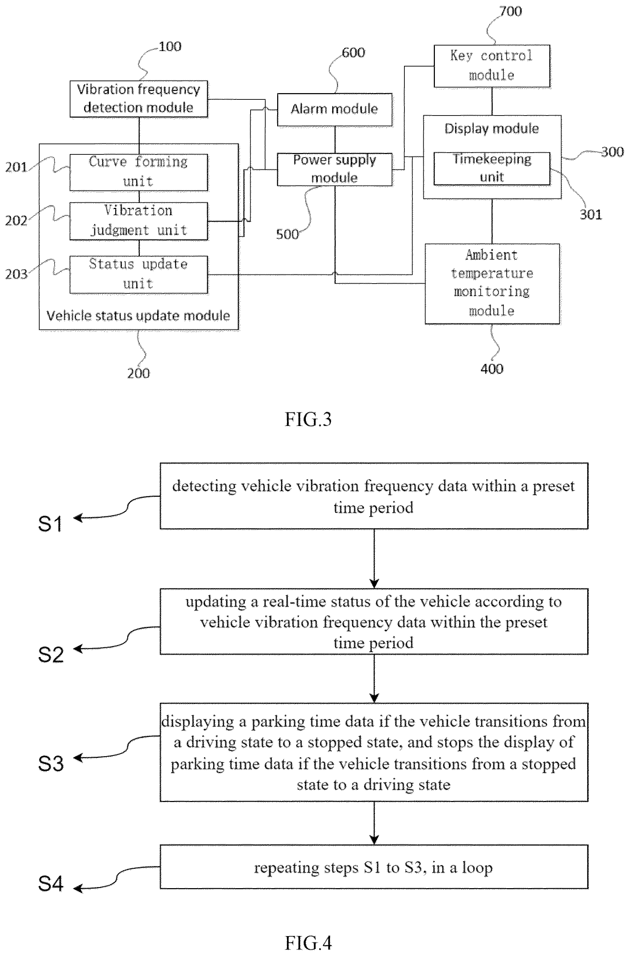

Referring to Figure 3, the difference of this embodiment compared to embodiment one is that the moving status update module 200 in this embodiment includes a curve forming unit 201, a vibration judgment unit 202, and a status update unit 203 connected in series, the curve forming unit 201 being connected to the vibration frequency detection module 100, and the status update unit 203 being connected to the display module 300;
the curve forming unit 201 is used for forming a vehicle vibration frequency curve of the vehicle vibration frequency over time based on the vehicle vibration frequency data within a preset time period;
the vibration judgment unit 202 is configured to fit the vehicle's vibration frequencies for each sub-time period within the preset time period to form a vehicle's vibration frequency variation curve;
the vibration judgment unit 202 is configured for determining whether the vehicle is vibrating based on the vehicle vibration frequency variation curve and determine the cause of the vehicle vibration based on the similarity between the vehicle vibration frequency variation curve and predetermined template curves corresponding to different vibration causes; therefore it can determine whether the vibration is generated between the vehicle and the road surface during driving;
the status update unit 203 is used for updating the real-time status of the vehicle based on the judgment result of the vibration judgment unit 202.

It can be seen that in this embodiment, the vibration frequency of the vehicle corresponding to each sub-time period within a predefined time is fitted to form a vehicle vibration frequency variation curve. Based on this curve, the system can determine whether the vehicle is vibrating and the cause of the vibration. By transforming the data from individual points to a continuous curve, the accuracy of the judgment is greatly increased.

Now, let's explain how to obtain the vibration frequency template curves corresponding to different vibration causes:

First, various vibration scenarios are simulated, and for each scenario, a predefined number of simulations are performed. This allows for the fitting of multiple vehicle vibration frequency variation curves for each vibration scenario. These fitted curves represent the vibration frequency variation in the corresponding scenarios, including normal driving vibration scenarios.

Furthermore, when simulating various vibration scenarios, different vehicle models and road conditions can be taken into account, making the obtained template curves more specific and targeted.

In this embodiment, it is only necessary to obtain these template curves before production. In the subsequent application, real-time detection of the vehicle vibration frequency variation curve is performed, followed by similarity calculation. This simplifies the subsequent processing steps and ensures high accuracy.

The similarity calculation of curves can be done using the Euclidean distance. This involves calculating the Euclidean distance between corresponding points on two curves and then taking the average or weighted average of all the distances to measure the similarity of the curves. A smaller Euclidean distance indicates a higher similarity between the curves.

### Embodiment 3

Referring to Figure 4, this embodiment provides an automatic parking timekeeping method, comprising steps of:
S1: detecting vehicle vibration frequency data within a preset time period;
S2: updating a real-time status of the vehicle according to vehicle vibration frequency data within the preset time period;
S3: displaying parking time data if the vehicle transitions from a driving state to a stopped state, and stops the display of parking time data if the vehicle transitions from a stopped state to a driving state;
S4: repeating the steps S1 to S3, in a loop.

Specifically, in step S1:
detecting the vehicle vibration frequency corresponding to a plurality of sub-time periods within the preset time period, and combining the vehicle vibration frequencies of each sub-time period to form the vehicle vibration frequency data within the preset time period.

Specifically, in step S2:
determining, according to a vehicle vibration frequency of each sub-time period within the preset time period and a plurality of preset threshold ranges, whether the vehicle vibrates and a vehicle vibration cause;
updating the real-time status of the vehicle based on the determination result of the vibration determination unit 202.

The beneficial effects of this embodiment are similar to Embodiment 1, and will not be repeated here.

### Embodiment 4

The present embodiment provides a method for automatic parking timekeeping, which differs from Embodiment 3 in that:
in step (S2):
fitting the vehicle vibration frequency corresponding to each sub-time period within the preset time period to form a vehicle vibration frequency variation curve;
determining whether the vehicle vibrates according to the vehicle vibration frequency variation curve, and determining a vehicle vibration cause based on the similarity between the vehicle vibration frequency variation curve and the vehicle vibration frequency template curve corresponding to predetermined vibration causes;
updating the real-time status of the vehicle based on the determination result of the vibration determination unit.

The beneficial effects of this embodiment are similar to Embodiment 2, and will not be repeated here.

The above described embodiments are only a description of the preferred embodiments of the present invention, not a limitation of the scope of the present invention. Without departing from the spirit of the design of the present invention, all kinds of deformations and improvements made to the technical solutions of the present invention by a person of ordinary skill in the art shall fall within the scope of protection of the present invention.

## Claims

1. An electronic parking disc, comprising a vibration frequency detection module (100), a vehicle status update module (200) and a display module (300) connected in series;
the vibration frequency detection module (100) is configured for detecting a vehicle vibration frequency data within a preset time period;
the vehicle status update module (200) is configured for updating a real-time status of the vehicle according to the vehicle vibration frequency data within the preset time period;
the display module (300) displays parking time data when the vehicle changes from a driving state to a stopped state, and stops displaying the parking time data when the vehicle changes from a stopped state to a driving state.

2. The electronic parking disc according to claim 1, **characterized in that**, a ball-type vibration sensor is adopted in the vibration frequency detection module; the ball-type vibration sensor comprising a vibration sensing switch, the vibration sensing switch comprising:
an insulating body (10) with a hollow structure; two metal electrode covers (20), which are inserted into the ends of the insulated body to seal it, with their opposing surfaces concave inward to create a housing space (50); two balls (30), which are placed within the housing space (50), with their combined diameter slightly smaller than the maximum width of the housing space (50); when the insulating body (10) is in a static state, the balls (30) are in contact with the metal electrode covers (20), causing the vibration sensing switch to be in an ON state; when the insulated body (10) experiences vibration, the balls (30) momentarily separate due to bouncing, resulting in the vibration sensing switch being turned OFF.

3. The electronic parking disc according to claim 1, **characterized in that**, the display module (300) comprises a timekeeping unit (301) that provides a reference time, the displayed parking time data includes the reference time when the vehicle changes from a driving state to a stopped state.

4. The electronic parking disc according to claim 1, **characterized in that**, the displayed parking time data include a duration of the vehicle's stopped state after it changes from driving state to the stopped state.

5. The electronic parking disc according to claim 1 to 4, **characterized in that**, the vibration frequency detection module (100) is configured to detect the vehicle's vibration frequencies corresponding to a plurality of sub-time periods within the preset time period, and the vibration frequency data comprise vehicle's vibration frequencies for each sub-time period.

6. The electronic parking disc according to claim 5, **characterized in that**, the vehicle status update module (200) comprises a vibration judgment unit (202) and a status update unit (203); the vibration judgment unit (202) is connected to the vibration frequency detection module (200), and the status update unit is connected to the display module (300);
the vibration judgment unit (202) is configured for determining whether the vehicle is vibrating and/or a cause of vehicle vibration based on the vehicle's vibration frequencies for each sub-time period within the preset time period and a plurality of predetermined threshold ranges;
the status update unit (203), based on a judgment result of the vibration judgment unit (202), updates a real-time status of the vehicle.

7. The electronic parking disc according to claim 5, **characterized in that**, the vehicle status update module (200) comprises a curve forming unit (201), a vibration judgment unit (202), and a status update unit (203) connected in series; the curve forming unit (201) being connected to the vibration frequency detection module (100), and the status update unit (203) being connected to the display module (300);
the curve forming unit (201) is configured to fit the vehicle's vibration frequencies for each sub-time period within the preset time period to form a vehicle's vibration frequency variation curve;
the vibration judgment unit (202) is configured for determining whether the vehicle is vibrating based on the vehicle vibration frequency variation curve and/or for determining a cause of the vehicle vibration based on a similarity between the vehicle vibration frequency variation curve and predetermined template curves corresponding to different vibration causes;
the status update unit (203) is used for updating a real-time status of the vehicle based on the judgment result of the vibration judgment unit (202).

8. The electronic parking disc according to claims 1~4, **characterized in that**, the electronic parking disc further comprises an alarm module (600) and a power supply module (500); the power supply module (500) being connected to the display module (300) and the alarm module (600), respectively; the power supply module (500) comprising a power supply unit and a battery level detection unit;
the power supply unit is configured for supplying power to the electronic parking disc;
the battery level detection unit is configured for detecting a real-time battery level of the power supply module (500);
the display module (300), is further configured for displaying a real-time battery level of the power supply module (500);
the alarm module (600) triggers an alarm when the battery level of the power supply unit falls below the preset threshold.

9. The electronic parking disc according to claims 3, **characterized in that**, the electronic parking disc further comprises a key control module (700) connected to the timekeeping unit (301); the key control module (700) is configured for adjusting the reference time in the timekeeping unit (301).

10. The electronic parking disc according to claims 9, **characterized in that**, the key control module (700) is also configured for adjusting a display mode of the display module (300), and the display mode comprises a night mode and a day mode.

11. The electronic parking disc according to claims 1~4, further comprising an ambient temperature monitoring module (400) connected to the display module (300); the ambient temperature monitoring module (400) is configured to detect the temperature inside the vehicle, and the display module (300) is also configured to display the ambient temperature in real-time.

12. An automatic parking timekeeping method, with an electronic parking discs according to any of claims 1 to11, comprising steps of:
detecting (S 1) vehicle vibration frequency data within a preset time period;
updating (S2) a real-time status of the vehicle according to vehicle vibration frequency data within the preset time period;
displaying (S3) parking time data if the vehicle transitions from a driving state to a stopped state, and stops the display of the parking time data if the vehicle transitions from a stopped state to a driving state;
repeating (S4) the steps detecting (S 1) to displaying (S3), in a loop.

13. The automatic parking timekeeping method according to claim 12, **characterized in that**, in step detecting (S1): detecting the vehicle vibration frequency corresponding to a plurality of sub-time periods within the preset time period, and combining the vehicle vibration frequencies of each sub-time period to form the vehicle vibration frequency data within the preset time period.

14. The automatic parking timekeeping method according to claim 12, **characterized in that** in step updating (S2):
determining, according to a vehicle vibration frequency of each sub-time period within the preset time period and a plurality of preset threshold ranges, whether the vehicle vibrates and/or a vehicle vibration cause;
updating the real-time status of the vehicle based on the determination result of the vibration determination unit (202).

15. The automatic parking timekeeping method according to claim 13, **characterized in that** step updating (S2) comprises:
fitting the vehicle vibration frequencies corresponding to each sub-time period within the preset time period to form a vehicle vibration frequency variation curve;
determining whether the vehicle vibrates according to the vehicle vibration frequency variation curve, and/or determining a vehicle vibration cause based on the similarity between the vehicle vibration frequency variation curve and the vehicle vibration frequency template curves corresponding to predetermined vibration causes;
updating the real-time status of the vehicle based on the determination result of the vibration determination unit (202).
